# EUROPEAN PATENT APPLICATION

(11) **EP 3 828 706 A1**
(43) Date of publication of application: **02.06.2021**
(21) Application number: 19920640.0
(22) Date of filing: 20.12.2019
(51) Int. Cl.: G06F 9/50, G06N 20/00

(54) **STATE PREDICTION SYSTEM**

(30) Priority: 30.09.2019 JP 2019178519
(71) Applicant: Hitachi Information & Telecommunication Engineering, Ltd., Yokohama-shi, Kanagawa 220-6122 (JP)
(72) Inventor: UEJIMA Toshiaki, Yokohama-shi Kanagawa 2206122 (JP)
(74) Representative: Manitz Finsterwald Patent- und Rechtsanwaltspartnerschaft mbB
(86) International application number: PCT/JP2019/050135
(87) International publication number: WO 2021/065021

(57) **Abstract**

A state prediction system comprises a plurality of embedded machine-learning sections and a mutual interface configured to link the plurality of embedded machine-learning sections to each other. The plurality of embedded machine-learning sections performs parallel processing, each of the plurality of embedded machine-learning sections computes a predicted value of plurality of variable data and outputs the predicted value to the mutual interface. When a predicted value output from one of the plurality of embedded machine-learning sections changes, the one of the plurality of embedded machine-learning sections passes changed predicted value to another embedded machine-learning section(s) through the mutual interface. The another embedded machine-learning section(s) acquire(s) the changed predicted value and recomputes a new predicted value of the plurality of variable data based on the changed predicted value as a new input so as to output the new predicted value to the mutual interface.

## Description

### TECHNICAL FIELD

The present invention relates to a state prediction system, especially, a state prediction system using an AI function.

### BACKGROUND ART

Conventionally, machine learning processing by AI is intensively performed by a cloud and an on-premises server or PC. For example, Patent Literature 1 discloses an example of real time control which is performed by using AI for a plurality of objects with dynamic variation.

Patent Literature 2 discloses an intensive game server based online game using AI.

### CITATION LIST

### PATENT LITERATURE

Patent Literature 1: US 2019/0129732 A
Patent Literature 2: US 2019/0168122 A

### SUMMARY OF INVENTION

### TECHNICAL PROBLEM

In both Patent Literature 1 and Patent Literature 2, a single AI system intensively performs multiple processing. Accordingly, when computation load of AI processing is heavy, there is a problem that it takes time to output a computation result. Especially, in a system using such as an IoT and a log, a large amount of data is generally input and output. Accordingly, when a single AI system intensively performs the processing, an amount of input data and an amount of computation become enormous, thereby remarkably lowering processing speed. Furthermore, the intensive processing of data, in which the number of input portions or output portions of data increases or decreases, has a problem that re-learning frequently occurs, which leads to a demand to improve operational deterioration due to wait of the re-learning.

The present invention has been made in view of the actual situations described above, and an objective of the present invention is to provide a state prediction system for predicting a state of an object by using a plurality of variable data, which is capable of suppressing decrease in computation processing speed even when AI is applied thereto.

### SOLUTION TO PROBLEM

The present invention has been made in view of the actual situations described above, and the present invention includes the technical features described in the claims. To give an example, the present invention is configured to provide a state prediction system that outputs a predicted value of a state of an object based on a plurality of variable data, comprising: a plurality of embedded machine-learning sections, each of the plurality of embedded machine-learning sections being configured to perform processing for each piece of the plurality of variable data in accordance therewith, and compute a predicted value of the plurality of variable data; and a mutual interface configured to link the plurality of embedded machine-learning sections to each other, wherein the plurality of embedded machine-learning sections is configured to perform parallel processing, each of the plurality of embedded machine-learning sections computes a predicted value of the plurality of variable data so as to output the predicted value to the mutual interface, when a predicted value output from one of the plurality of embedded machine-learning sections changes, the one of the plurality of embedded machine-learning sections passes the predicted value that has changed to another one of the plurality of embedded machine-learning sections through the mutual interface, and the another one of the plurality of embedded machine-learning sections which has acquired the predicted value that has changed recomputes a new predicted value of the plurality of variable data based on the predicted value that has changed as a new input so as to output the new predicted value to the mutual interface.

According to the state prediction system of the present invention, it is possible to suppress decrease in computation processing speed even when AI is applied to the state prediction system for predicting a state of an object by using a plurality of variable data. With this configuration, since the variable data can be computed by simultaneous parallel processing of machine-learning at a large number of portions across the entire system, it is possible to realize distributed processing across the entire system while load concentration is reduced.

Furthermore, the state prediction system according to present invention may be configured to further comprise: a first embedded machine-learning section configured to perform identification, prediction, or both of them (hereinafter abbreviated as "identification or prediction") with respect to one piece of variable data; and a second embedded machine-learning section configured to perform generation model prediction, wherein the identification or prediction and the generation model prediction are evaluated based on each of an output of the first embedded machine-learning section and an output of the second embedded machine-learning section, and control is performed by using one of the identification or prediction and the generation model prediction, which has higher evaluation.

The machine-learning processing includes identification or prediction processing and generation model prediction processing. In the identification or prediction processing, a prediction dictionary is prepared and an output is determined based on distance evaluation between an input and data stored in the prediction dictionary. In the generation model prediction processing, a learned model is generated in advance by using training data including variable data (output) and an input used for computation of the variable data (output), and a new input is applied to the generated learned model so as to compute new variable data. Which of the processing among the identification or prediction processing and the generation model prediction processing has higher accuracy differs depending on the characteristic of the variable data. In the present invention, the identification or prediction processing and the generation model prediction processing are prepared for one piece of variable data and the prediction processing that matches the characteristic of the variable data more than the other is performed, and accordingly, it is possible to improve prediction accuracy.

Furthermore, the state prediction system according to present invention may be configured to further comprise a token interface configured to evaluate, as a linkage effect with other embedded machine-learning sections, the linkage effect of control for other embedded machine-learning sections. Still further, a token interface configured to evaluate, as a linkage effect with other embedded machine-learning sections, the linkage effect of control for other embedded machine-learning sections may be provided.

With this configuration, when new variable data is output at the time of computation performed in parallel by the embedded machine-learning sections, the new variable data is passed to an embedded machine-learning section having a higher linkage effect, while it is not passed to a machine-learning section having no linkage effect. As a result, it is possible to prevent the new variable data from being passed despite the absence of a linkage effect and machine-learning computation which is essentially unnecessary from being performed.

Furthermore, the state prediction system according to present invention may be configured wherein the state prediction system is configured with a plurality of nodes, and each of the plurality of nodes is configured with the plurality of embedded machine-learning sections to execute system state optimal control across the plurality of nodes.

Furthermore, the state prediction system according to present invention may be configured wherein the plurality of embedded machine-learning sections configured to perform computation for each different piece of variable data is included in one Cell.

### ADVANTAGEOUS EFFECTS OF INVENTION

According to the present invention, it is possible to provide a state prediction system for predicting a state of an object by using a plurality of variable data, which is capable of suppressing decrease in computation processing speed even when AI is applied thereto. The objectives, configurations, and effects other than those described above will be clarified by explanation of the embodiments below.

### BRIEF DESCRIPTION OF DRAWINGS

[FIG. 1] FIG. 1 is an overall configuration diagram of a state prediction system.
[FIG. 2] FIG. 2 is a software configuration diagram of a system application program.
[FIG. 3] FIG. 3 illustrates an instance that is generated when a system application program is executed.
[FIG. 4] FIG. 4 illustrates a configuration example of a store operation system to which a state prediction system is applied.
[FIG. 5] FIG. 5 illustrates a relationship between a store operation system and an upper system.
[FIG. 6] FIG. 6 illustrates a configuration example of a Cell instance corresponding to a node object "Order Quantity A1 Prediction".
[FIG. 7] FIG. 7 illustrates a flowchart of a general processing flow of a state prediction system.
[FIG. 8] FIG. 8 illustrates a flowchart showing an order operation processing flow in a store operation system.
[FIG. 9] FIG. 9 illustrates a configuration example of a Cell instance corresponding to a node object "Product Quality A-Value Prediction".
[FIG. 10] FIG. 10 illustrates a flowchart showing a work state management operation processing flow in a manufacturing site management system.
[FIG. 11] FIG. 11 illustrates a configuration example of a Cell instance corresponding to a node object "Logical Design Device Control Interface Signal-A Timing.
[FIG. 12] FIG. 12 illustrates a flowchart showing a logical design processing flow in a design operation system.
[FIG. 13] FIG. 13 illustrates another implementation example of a state prediction system.
[FIG. 14] FIG. 14 illustrates a configuration example of a Cell instance corresponding to "Machine Control Motor-A Rotation Angle Prediction".
[FIG. 15] FIG. 15 illustrates a configuration example of a Cell instance corresponding to "Agricultural Product Production Control Prediction".
[FIG. 16] FIG. 16 illustrates a configuration example of a Cell instance corresponding to "Stock Index Prediction".
[FIG. 17] FIG. 17 illustrates a configuration example of a Cell instance corresponding to "Travel Time Prediction".

### DESCRIPTION OF EMBODIMENTS

Hereinafter, embodiments of the present invention will be described. Firstly, terms used in the following description will be explained.
- A system application program (hereinafter "application" is abbreviated to "AP") in the present embodiment includes, for example, a store operation system program, a manufacturing site management system, and a design operation system, which are examples of systemAP programs to which a state prediction system is applied. A state prediction device is a device in which the system AP program is installed and made executable.
- An object is a subject to state prediction in the system AP. For example, in the store operation system, an order slip in an order slip operation corresponds to an object. In a manufacturing equipment management system, a manufacturing equipment sensor data file in a management operation of a working state of a manufacturing equipment corresponds to an object. In the design operation system, a logical design specification in logical design processing corresponds to an object.
- Variable data is data of which values vary in an object. A column in which the variable data is placed in the object is called a variable data column. For example, regarding the order slip (object), an order quantity of products is the variable data, and the column in an order slip format, in which the order quantity is filled, is the variable data column. Regarding the manufacturing equipment sensor data file, sensor data is the variable data, and a storage area of the sensor data in the manufacturing equipment sensor data file is the variable data column. Regarding the logical design specification, explanation signal data is the variable data, and the column in the logical design specification, in which the explanation signal is filled, is the variable data column.
- An Entity is an entity of the variable data. For example, regarding an order quantity (variable data) of a product A1 in an order slip (object), the "entity" of the order quantity is Entity. The order slip includes the (order) quantity of the product A1, the (order) quantity of a product A2, etc., and each of the (order) quantities thereof is Entity. A value of the sensor data and a value of a signal level of the explanation signal also correspond to Entity.
- A node object (hereinafter, abbreviated to "node") is a program module that computes Entity of each variable data included in the system AP program. One node is provided for one piece of variable data. Among a plurality of variable data included in the system AP program, when Entity of a first variable data is changed and then Entity of a second variable data is changed accordingly, a first node corresponding to the first variable data and a second node corresponding to the second variable data are configured in association to each other. More specifically, the first node and the second node are configured in association to each other so that Entity output from the first node becomes an input of the second node. Each node is configured to include one Cell and a plurality of u-AIs included in the Cell.
- A Cell is a module that performs processing for interfacing a u-AI class with a system or an application and another u-AI class around the u-AI class. One Cell is provided for one piece of the variable data. A Cell class program and a u-AI class program are placed within the system AP program. A "class" referred herein is a type of processing, in which a group of functions or methods indicating a data processing method and properties (attributes) to be set to the functions are defined. On the other hand, an "instance" described later is a program entity in which, upon a function or a method and a property corresponding to specific data being specified from a class (processing type), only a part necessary for the processing is copied and executed on a CPU.
- A u-AI (embedded machine-learning section, "u-" is for "ubiquitous") is a program module that performs machine-learning processing such as time series prediction and regression prediction. The u-AI outputs one kind of Entity by using a single function. The u-AI calculates a parameter necessary for identification and prediction by machine-learning, generates an identification dictionary and a prediction dictionary, and stores a result thereof in a storage through the Cell. The u-AI utilizes a learning result computed by itself by using a function so as to perform at least one of identification processing, prediction processing, and evaluation processing of data given from the outside through the system AP program and the Cell.

Hereinafter, the present embodiment will be described with reference to the drawings. Throughout the drawings, the same components are provided with the same reference signs and repetitive explanation thereof will be omitted.

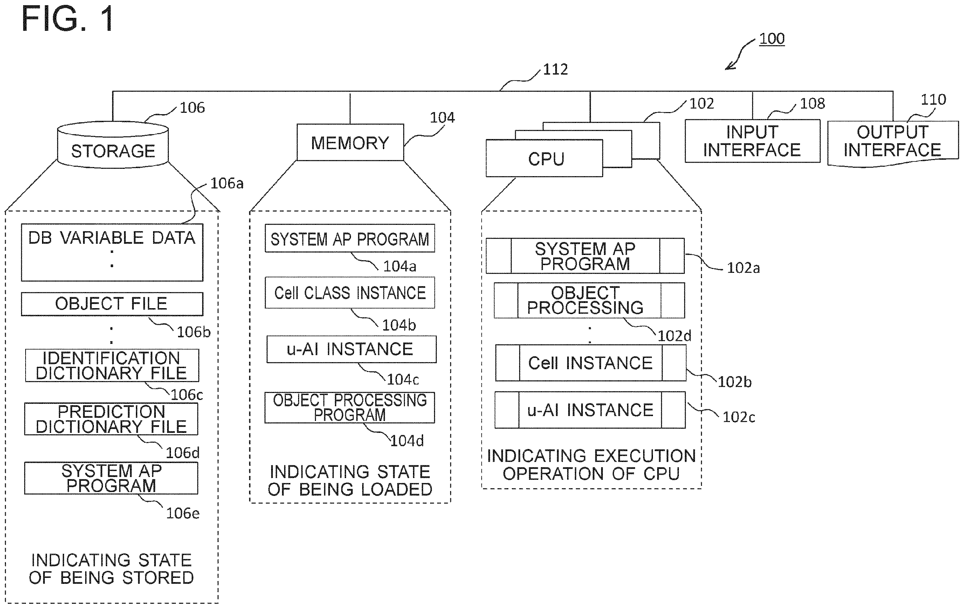

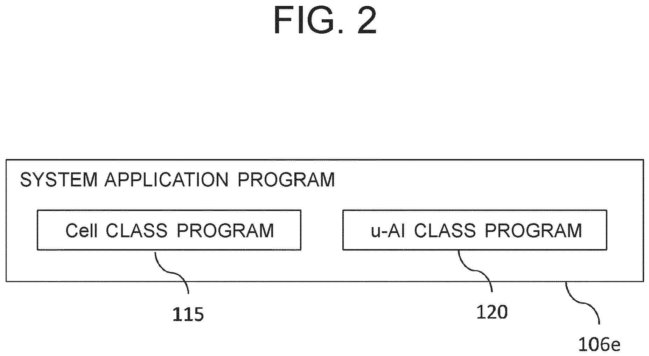

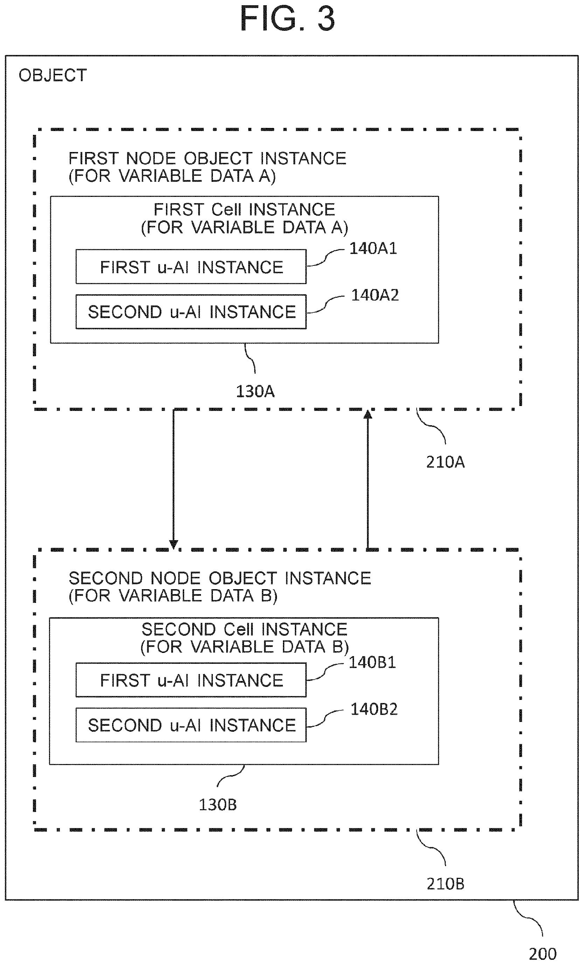

FIG. 1 is an overall configuration diagram of a state prediction system 100 according to the present embodiment. FIG. 2 is a software configuration diagram of a system AP program 106e. FIG. 3 illustrates an instance that is generated when the system AP program 106e is executed.

The state prediction system 100 of FIG. 1 is configured by a computer including a CPU 102, a memory 104, a storage 106, an input interface 108, and an output interface 110 which are connected to each other via a bus 112.

The storage 106 stores DB variable data 106a, an object file 106b, an identification dictionary file 106c, a prediction dictionary file 106d, and a system AP program 106e.

As illustrated in FIG. 2, in a state of being stored in the storage 106, the system AP program 106e stores a Cell class program 115 and a u-AI class program 120 in the same hierarchy.

The u-AI class program 120 stores a plurality of kinds of functions used for machine-learning. The state prediction system 100 includes n numbers of the Cell class programs 115 when there are n pieces of variable data. In each Cell class program 115, which function to be used among the plurality of kinds of functions included in the u-AI class program 120 is defined.

When reading out the system AP program 106e from the storage 106 and loading it into the memory 104 for execution, the CPU 102 reads out the Cell class program 115. Then, a Cell class is called so that a Cell instance 104b is generated. When executing the Cell instance (102b), the CPU 102 reads out function names defined in the Cell instance (these two function names differ from each other) from the u-AI class program 120, and also reads out required parameters from, for example, the DB variable data 106a. As a result, two kinds of u-AI instances 104c are generated and executed (102c).

A specific example will be described with reference to FIG. 3. When starting the system AP program 106e, the CPU 102 reads out a file of an object 200 from the object file 106b. The object 200 includes two columns for variable data A and variable data B.

The file of the object 200 includes a first node object 210A and a second node object 210B. The first node object 210A is a module that computes the variable data A. The second node object 210B is a module that computes the variable data B.

The CPU 102 generates a first Cell instance 130A in the first node object 210A. Furthermore, the CPU 102 reads out names of necessary two functions from the first Cell instance 130A. Then, the CPU 102 refers to the prediction dictionary file 106d based on the names of the two function which have been read out, and acquires the two functions. Similarly, the CPU 102 reads out parameters to be applied to the two functions from the DB variable data 106a. Then, the CPU 102 applies the parameters required by each of the functions thereto so as to generate a first u-AI instance 140A1 and a second u-AI instance 140A2.

The CPU 102 executes the second node object 210B so as to generate a second Cell instance 130B as well as a first u-AI instance 140B1 and a second u-AI instance 140B2 which are generated by the second Cell instance 130B.

The CPU 102 performs association so that Entity output by the first node object 210A becomes an input of the second node object 210B. An output stage of the first node object 210A may be directly associated (may be logically connected) with an input stage of the second node object 210B. In addition, the CPU 102 also performs association so that Entity output by the second node object 210B becomes an input of the first node object 210A. An output stage of the second node object 210B may be directly associated (may be logically connected) with an input stage of the first node object 210A.

Input to the variable data, in other words, input to the node object may be performed, for example, from a database (hereinafter referred to as "DB") (a DB in which data from an IoT is temporarily input, a DB which is automatically updated in accordance with updating of other variable data, a DB which is automatically updated in accordance with updating of the variable data itself, etc.). When an input destination of the variable data is set, data is acquired from the set DB or merging processing (including a combination involving computation, etc.) is performed. Output is performed with respect to the DB which is automatically updated in accordance with updating of the variable data itself.

Furthermore, the CPU 102 stores the Entity output by the first node object 210A in the DB variable data 106a. It may be configured such that, thereafter, the CPU 102 reads out the Entity output by the first node object 210A from the DB variable data 106a as a parameter to be applied to the first u-AI instance 140B1 and the second u-AI instance 140B2 in the second node object 210B and uses it as an input value.

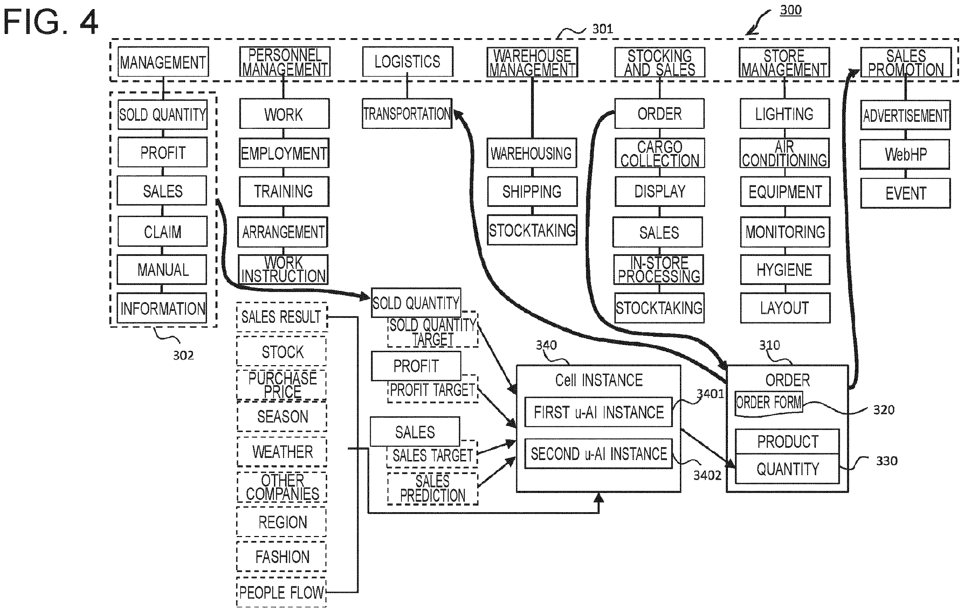

FIG. 4 illustrates a configuration example of a store operation system 300 to which the state prediction system 100 is applied.

A first level operation performed by the store operation system 300 includes "management", "personnel management", "logistics", "warehouse management", "stocking and sales", "store management" and "sales promotion" as indicated in a line 301.

Each of the first level operation includes a second level operation that is an item in which the first level operation is more subdivided. For example, a "management" operation further includes the second level operations of "sold quantity", "profit", "sales", "claim", "manual" and "information" which are arranged in a column 302.

An "order operation" which is one of the second level operations of the "stocking and sales" includes an "order form" 320 as an object 310. The "order form" 320 includes a "quantity" entry field 330 (variable data column) of a product as variable data.

A Cell instance 340 outputs Entity of a "quantity" of a product as the variable data. When the Cell instance 340 is executed, a first u-AI instance 3401 and a second u-AI instance 3402 are generated.

The Cell instance 340 performs computation in the first u-AI instance 3401 and the second u-AI instance 3402 by using each Entity of the "sales target" which is the variable data of the second level operation "sales" of the "management", "profit target" which is the variable data of the "profit", and "sales target" and "sales prediction" which are the variable data of the "sales" as input parameters.

A computation result of the first u-AI instance 3401 and the second u-AI instance 3402 is entered in the "quantity" entry field 330 of the product.

The Entity entered in the "quantity" entry field 330 of the product becomes an input for other operations, more specifically, an input for Cell classes of "transportation" and "promotion".

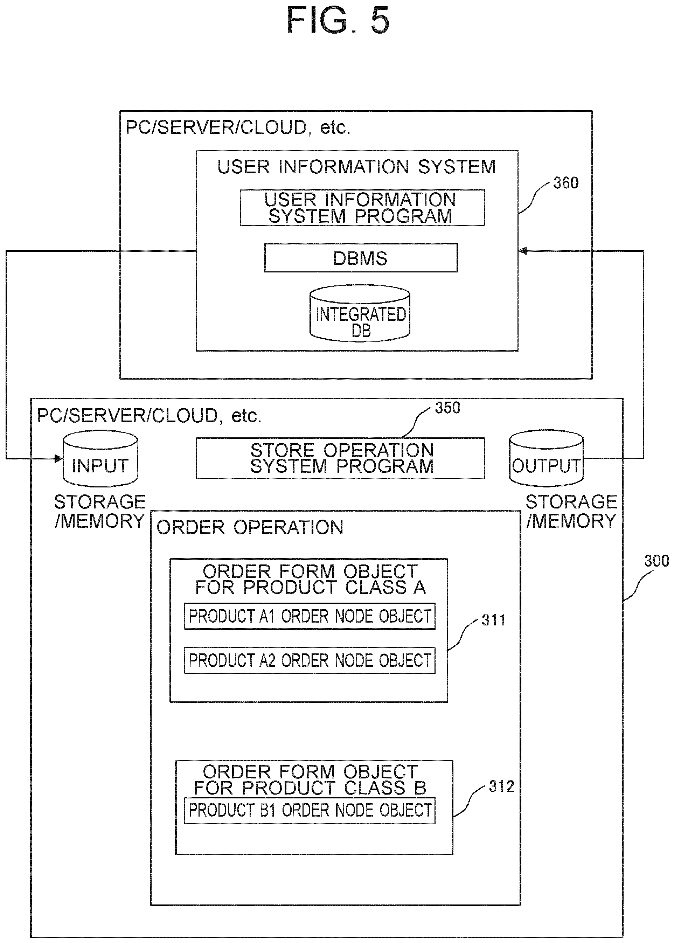

FIG. 5 illustrates a relationship between the store operation system 300 and an upper system. The store operation system 300 is configured by execution of an AP 350 of the store operation system 300, which is placed on a PC, a server, or a cloud. The store operation system 300 is a system, for example, for managing operations of a single store. As an upper system of the store operation system 300, a user information system 360 which controls a plurality of store operation systems 300 may be employed. Each of the store operation system 300 is placed in each store while the user information system 360 is a system placed in a head office which has a function of controlling a store area, such as a head office or a regional branch office.

The order operation of the store operation system 300 includes a plurality of objects such as an order form object 311 for product class A and an order form object 312 for product class B.

The order form object 311 for product class A includes a column in which an order quantity of each of "product A1" and "product A2" is filled. That is, the order form object 311 for product class A includes the order quantity of the "product A1" and the order quantity of the "product A2" as the variable data, and thus includes a node object for each of the variable data.

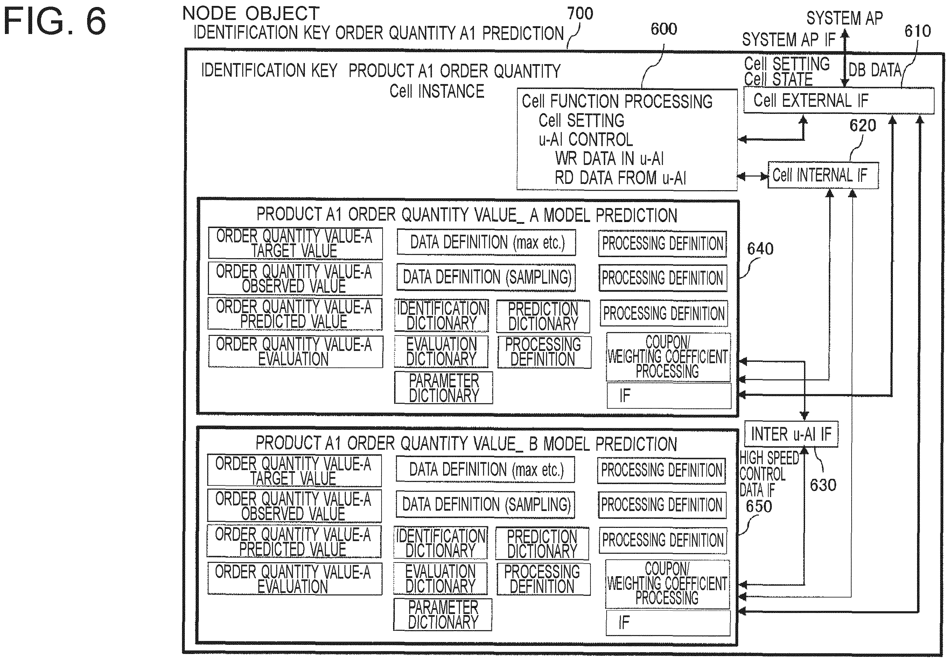

With reference to FIG. 6, an instance generated when the state prediction system is applied to an issue operation of an order form included in the store operation system 300 will be described. FIG. 6 illustrates a configuration example of a Cell instance corresponding to a node object "Order Quantity A1 Prediction".

A Cell instance 700 is a Cell instance corresponding to the node object "Order Quantity A1 Prediction". Depending on a configuration of the instance, u-AI linkage across objects and u-AI linkage across nodes may be performed via data. Both the u-AI linkage across objects and the u-AI linkage across nodes are performed via data through a Cell external IF 610. The u-AI linkage between nodes across objects via data includes, for example in the case of an order (purchase) form of the product A, linkage with one of sales and profit or both, forecast, results, and materials. In the case of an order (purchase) form of another product, linkage with a sales promotion plan, an operation (organization) structure, an operation process (procedure), and an input or an output specification is included. The Cell instance 700 includes a Cell function processor 600, the Cell external IF 610, a Cell internal IF 620, a u-AI IF 630, a product A1 order quantity value_ A model prediction (first u-AI 640), and a product A1 order quantity value_ B model prediction (second u-AI 650). 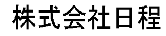 Linkage is realized by second u-AI instance 3402 →Cell external IF 610 → DB (outside) → Cell external IF 610 → first u-AI instance 3401, or first u-AI instance 3401 → Cell external IF 610 → DB (outside) → Cell external IF 610 → second u-AI instance 3402.

The Cell function processer 600 executes the following processing.
- System AP IF
- Setting processing from system AP
- Generating u-AI
- Configuration processing IF with system AP
- u-AI setting from user system AP setting processing
- Importing DB data
- Segmentation processing common to u-AIs
- Determining data type
- Writing data and segment information in u-AI
- Acquiring processing result from u-AI
- Writing processing result in DB
- Evaluation by each u-AI segment
- Prediction assembly (combining segments)
- DB output of both each u-AI and u-AI combination

Because of linkage and interaction between u-AIs and Cells across a plurality of nodes, in other words, since u-AIs and Cells are configured that they take a part of output data of another u-AI and Cell as a part of an input, in the state prediction system 100, they are affected by output data of another u-AI and Cell. With this configuration, u-AIs and Cells machine-learn evaluation, prediction, control, and control settings of another u-AI and Cell so as to update outputs of evaluation, prediction, and control (including generation of control in which control of another u-AI and Cell is combined thereto).

Furthermore, in the state prediction system 100, u-AIs and Cells perform prediction based on both an identification model and a prediction model so as to improve accuracy of prediction and control effects. Specifically, they perform selection of a parameter and a function of target approach control by prediction dictionary search of the identification model, as well as selection of a parameter and a function of target approach control by a distribution variation of the prediction model, a regression thereof, and a hidden Markov model. Search and variation are updated by balance of both selected values and evaluation of both selection by result observation.

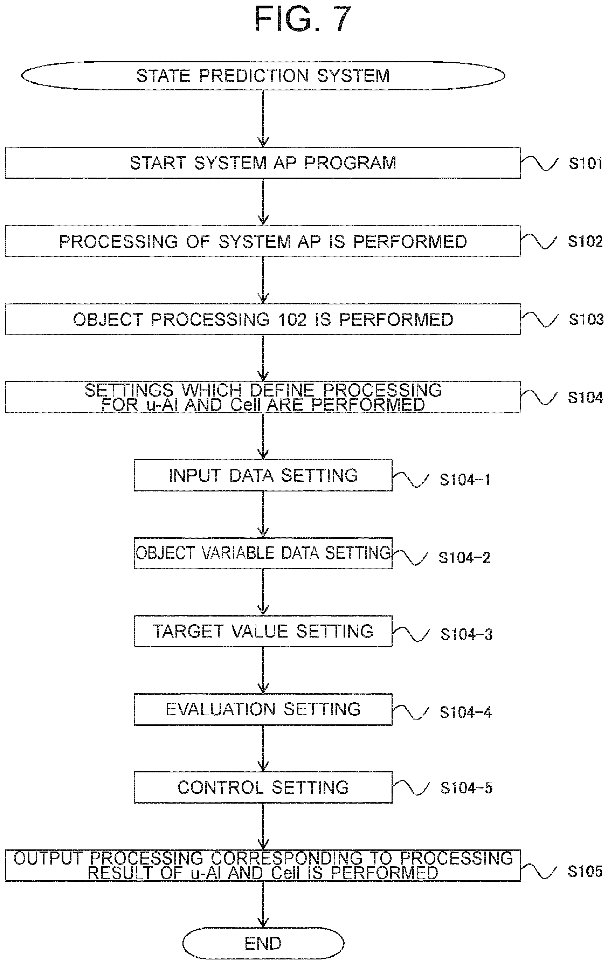

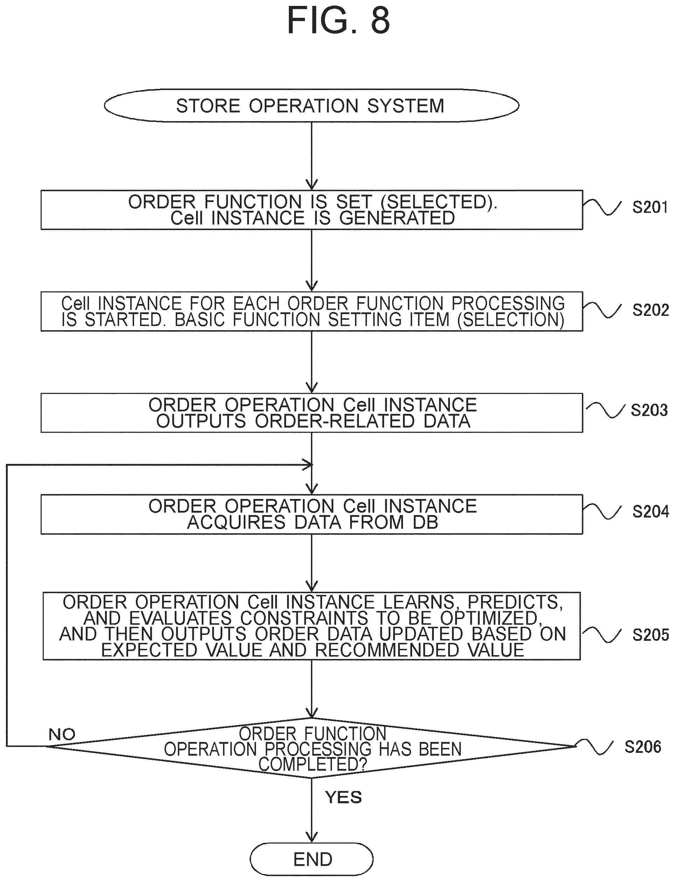

FIG. 7 illustrates a flowchart of a general processing flow of the state prediction system 100 according to the present embodiment. A flow of the processes in FIG. 7 being applied to the store operation system 300 will be described later with reference to FIG. 8.

The system AP program 106e is stored in the storage 106 in advance (S101) . The CPU 102 reads out the system AP program 106e from the storage 106 and loads it into the memory 104, thereby starting the state prediction system 100 (S102).

When the state prediction system 100 is started, object processing begins (S103) . The CPU 102 reads out the Cell class program 115 corresponding to each object.

The CPU 102 performs the following settings which define the processing of u-AI and Cell with respect to each node through the state prediction system 100 (S104). By defining the processing of u-AI and Cell, a Cell instance and a u-AI instance are generated.

An input data setting (DB or a source from which data such as variable data of another portion is acquired) is performed (S104-1) .

An object variable data setting (how to obtain the object variable data from input data, e.g., a regression equation, time series data up to a set time point, or a combination of learning data (indicated in input data setting) and label data (indicated in input data setting)) is performed (S104-2).

A target value setting is performed (S104-3).

An evaluation setting (labels corresponding to + (positive)value and - (negative) value) is performed (S104-4).

A control setting (planning, implementation, change) and others are performed (S104-5).

The CPU 102 performs processing of the Cell instance by a parallel process using a semaphore system and outputs a processing result (S105).

Through the state prediction system 100, the AP generates and starts a Cell instance at a time when the processing of a file with data to which a Cell object is already allocated is started, then the Cell instance further generates and starts a u-AI instance, and the processing is performed based on setting information and a result before one point of time.

In the processing of the Cell instance, a first u-AI instance and a second u-AI instance receive the same input and perform learning operation processing, respectively.

At the time of a learning operation, the AP acquires input data from the outside such as a user system, performs preprocessing, and stores it in the storage 106. The Cell instance acquires the input data through the Cell external IF (node IF) 610, performs data segmentation processing, and passes the data and segmentation processing result information to the first u-AI instance and the second u-AI instance.

Each of the first u-AI instance and the second u-AI instance generates an identification or prediction dictionary and an evaluation dictionary by identification or prediction learning.

At the same time, each of the first u-AI instance and the second u-AI instance generates a contribution ratio of data of other nodes, determination coefficient information, etc., which are obtained when the identification or prediction learning is performed.

Each of the first u-AI instance and the second u-AI instance maintains the identification or prediction dictionary and the evaluation dictionary generated by the identification or prediction learning in the u-AI, and the Cell instance acquires them through the Cell internal IF 620 and stores them in the storage 106 through the Cell external IF (node IF) 610.

Similarly, the Cell acquires the contribution rate of data of other nodes, the determination coefficient information, etc. through the Cell internal IF 620, and stores them in the storage 106 through the Cell external IF 610 as coupon information for other nodes.

The state prediction system 100 acquires the coupon information for each node from the storage 106, prioritizes each Cell processing based on setting information on data input by a user, stops an unnecessary Cell, and performs other processing.

Regarding (operations of (state) identification or prediction, or evaluation), the state prediction system 100 acquires input data from the outside of the state prediction system 100, performs preprocessing, and stores the data in the storage 106.

The Cell instance acquires the input data through the Cell external IF (node IF) 610, performs data segmentation processing, and passes the data and segmentation processing result information to the u-AI.

Each of the first u-AI instance and the second u-AI instance performs identification processing by using the identification dictionary, and outputs identification result data. Each of the first u-AI instance and the second u-AI instance also performs prediction (prediction control) processing by using the prediction (prediction control) dictionary, and outputs prediction (prediction control) result data. Furthermore, each of the first u-AI instance and the second u-AI instance performs evaluation processing by using the prediction (prediction control) result, the input data at the same time as a prediction time, and the evaluation dictionary, and generates evaluation result data.

The Cell instance acquires the identification result data, the prediction (prediction control) result data, and the evaluation result data, which are output by each of the first u-AI instance and the second u-AI instance, through the Cell internal IF 620.

The Cell instance compares the identification result data, the prediction (prediction control) result data, and the evaluation result data output by the two u-AIs in the Cell for each segments of data, and generates comparison evaluation result data. Then, the Cell instance stores the identification result data, the prediction (prediction control) result data, the evaluation result data, and the comparison evaluation result data in the storage 106 through the Cell external IF (node IF) 610.

The state prediction system 100 reads out the identification result data, the prediction (prediction control) result data, the evaluation result data, and the comparison evaluation result data of each Cell from the storage 106.

The state prediction system 100 integrates the identification result and the prediction result of each Cell, and performs identification and prediction of a state of the state prediction system 100.

The state prediction system 100 displays the identification or prediction result of each Cell and the identification or prediction result of the state prediction system 100 on a monitor screen through a user IF, outputs a form from a printer, or controls a device of the state prediction system 100 through a system IF based on the prediction result.

The "prediction" mentioned above includes prediction of a segment and prediction of segment connection. The prediction of a segment is obtained by setting a state of the data identified by the performed identification (corresponding to a state of the object of which the data is output or observed) as an initial state of the segment, and then computing change in the data corresponding to time width of the segmentation processing result by using a prediction computation parameter (e.g., regression coefficient) of the prediction dictionary. The prediction of segment connection is performed by time-serializing states of the data identified by the performed identification (corresponding to a state of the object of which the data is output or observed), and then referring to the prediction dictionary in the same manner as association with segment labels in (state transition time series) classification, so as to perform the (state transition time series) classification.

In addition, predication of data is performed by referring to the next segment label of the associated segment label from the prediction dictionary.

The processing of a Cell instance is performed by a parallel process using exclusive control according to a "semaphore " system. In the exclusive control, for example, the Cell instance that processes data A writes a predicted value of the data A in a predicted value writing portion for the data A of the DB as a processing result of a u-AI instance. At this time, the Cell instance that processes data B reads out the predicted value of data A from the DB and passes it to the u-AI instance that processes the data B in order to obtain a predicted value of the data B. In the process above, the exclusive control is performed so as to prevent writing of the data A in the DB by the Cell instance that processes the data A from conflicting with reading of the data A from the DB by the Cell instance that processes the data B. The exclusive control is performed for each Cell.

Both the u-AI instance and the Cell instance refer to the identification or prediction dictionary and the evaluation dictionary generated by preprocessing with respect to various input data of the AP, and identification or prediction learning.

### (Pre-processing (processed by u-AI))

The pre-processing includes missing value interpolation processing such as inserting the same data as one before when some data in each sampling period set for each data is missing, and scaling processing performed such that a scale between the data falls within a certain range in order to prevent an error from becoming large in later prediction value calculation or the like when scales of the numerical values between the data are largely separated.

### (Identification dictionary and Identification (processed by u-AI))

The identification dictionary is a file of contents for associating a feature quantity extracted from data and a state of data (corresponding to a state of the object of which the data is output or observed) with (identification) classification.

### (Identification (processed by u-AI))

An identification label is used for classification. Classification is performed by a k-means method, which is a generally known classification algorithm. In a process of identification, computation processing for extracting a feature quantity from data is performed to extract the feature quantity. A parameter such as computation coefficients of the computation processing for extracting the feature quantity and a parameter such as classification numbers to be given to a classification algorithm are learned so that an error of a classification processing result with respect to learning data becomes small, and the obtained parameters are also stored in the storage 106 as a part of the dictionary. An identification function determines a difference between the extracted feature quantity and a feature quantity registered in the identification dictionary, and outputs a (identification) classification label associated by the identification dictionary. The identification function calculates a distance in a feature quantity space, etc. to determine the difference between the feature quantity extracted from the data and the feature quantity registered in the identification dictionary.

### (Predication dictionary (processed by u-AI))

The prediction dictionary is a file representing state transition of data in a time series, to which the content associating the state transition time series with the (state transition time series) classification and connection information with a state transition time series segment are added. A prediction computation parameter (e.g., regression coefficient and state transition probability of a hidden Markov model) used for segment prediction is learned so that an error of a prediction processing result with respect to learning data becomes small, and the obtained parameters are also stored in the storage 106 as a part of the dictionary. The length of the time series is based on time width of a segmentation processing result.

### (Predication (processed by u-AI))

In the process of prediction, (state transition time series) classification is performed by time-serializing the state of the data identified by the performed identification (corresponding to a state of the object of which the data is output or observed) and referring to the prediction dictionary in the same manner as association with a segment label of the (state transition time series) classification so as to perform the (state transition time series) classification. The data is predicted by referring to the next segment label of the associated segment label from the prediction dictionary.

### (State transition time series (processed by u-AI))

A state transition time series segment label is used for (state transition time series) classification. When the time width of a segmentation processing result is long, a segment label is attached to each preset time width. The (state transition time series) classification is performed by division using a range of a total value of the time series length of the distance performed in the identification above at each time point of the time series, or using the distance from a pattern of the state transition of the time series to be prepared in advance for each classification (calculation of difference in numerical labels attached to each state at each time point of the time series).

### (Evaluation dictionary and Evaluation (processed by u-AI))

The evaluation dictionary in which an evaluation label is attached in advance to each difference value divided by a range of a prediction distance and an actual measurement distance is prepared. At the time when the measured data is input, the distance to the predicted data is calculated, the evaluation label is obtained by referring to the evaluation dictionary based on the difference value, and the evaluation label is output as evaluation.

The u-AI and the Cell have the following output data.
- State identification (including error detection and caution)
- Evaluation
- Prediction
- Control
- Expectation

The state prediction system 100 generates a first u-AI instance and a second u-AI instance for one piece of variable data A and outputs a predicted value of the variable data A. The first u-AI instance uses a first function, for example, a time series prediction function (machine-learning with low weight and high precision based on an identification model) to output a predicted value of the variable data A. On the other hand, the second u-AI instance uses a second function different from the first function, for example, a regression model (parameter estimation by a least squares method) or an approximate mixed Gaussian model (parameter estimation of a plural normal distribution by a small amount of data) to output a predicted value of the variable data A.

Although the same input is made between the first u-AI instance and the second u-AI instance, the outputs are not necessarily the same because the functions used for computation are different therebetween. Thus, the Cell instance produces the following outputs. Output examples are listed below.
- Information indicating which of the precision is higher is output for each temporal segment of data. This does not mean that only information with higher precision is output, but it means that both results are output.
- Segmentation results obtained by segmentation at a change point above a certain extent in a time series of the input data or a change point above a certain extent in a time series of the feature quantity.
- Data type determination results based on the time series of the feature quantity.
- Learning results (parameter value, identification dictionary, prediction dictionary) from each of the first u-AI instance and the second u-AI instance.
- Results such as identification or prediction, (state) evaluation, and control recommendation from each of the first u-AI instance and the second u-AI instance.
- Results of evaluation of precision comparison for each segment from each of the first u-AI instance and the second u-AI instance.
- (Predication performance) evaluation and coupons (weighting factors, determination coefficients, etc.) for each of the first u-AI instance and the second u-AI instance.

The Cell instance compares an output of the first u-AI instance and an output of the second u-AI instance, and outputs a result thereof as a part of the evaluation result. The first u-AI instance and the second u-AI instance are connected by the inter u-AI IF 630. Since the first u-AI instance and the second u-AI instance are different to each other in the processing of prediction and control, the outputs thereof may be used to compare and learn to each other by using the inter u-AI IF 630. Especially, in the case where high speed and real time processing is required, when the processing through the Cell or the DB from Cell cannot be performed in time, the comparison result by the inter u-AI IF 630 is used.

The system AP program 106e may be set to output either of the outputs of the first u-AI instance or the second u-AI instance, which has higher precision than the other.

The CPU 102 may allow the first u-AI instance and the second u-AI instance to perform a multi-threaded operation. Alternatively, the CPU 102 may be configured with a multi-core CPU so that each CPU core runs each u-AI instance. In this way, a plurality of u-AI instances is operated in parallel within the state prediction system 100. As a simpler way, it may be configured that no Cell is provided in the system or application, and only a plurality of u-AIs is operated in parallel within the state prediction system 100.

The u-AI and Cell are acted upon by taking a part of the outputs of another u-AI and Cell as a part of the inputs.

The outputs of the evaluation, prediction and control are updated by machine-learning the evaluation, prediction, control and control settings of another u-AI and Cell (including generation of control to which control of another u-AI and Cell is combined).

The u-AI and Cell performs prediction based on an identification model and a prediction model to increase precision of prediction and control effects.

For example,
- Selection of parameter and function of target approach control by prediction dictionary search of identification model
- Selection of parameter and function of target approach control by distribution variation of predication model
- Update search and variation by balance of both selected values and by evaluation of both selected values based on result observation.

The u-AI and Cell may perform evaluation interactively by exchanging tokens with another u-AI and Cell of the same state prediction system or application, or another state prediction system or application.

In the prior art, INTELLIGENCE ENGINE and MULTI-PLAYER PROCESSING ENGINE, etc. have performed machine-learning and AI processing of data of each node on a cloud system device, and distributed processing results such as control information to each node. The machine-learning and AI processing are intensively performed and each node is intensively controlled, and collection of data necessary for the machine-learning and AI processing, learning, identification or prediction, evaluation, and generation of control information are intensively processed. Accordingly, it is difficult to collect various data for each node and to perform the machine-learning and AI processing differently for each node. Furthermore, linkage processing between nodes needs to be performed by an AP program, and accordingly, it has been difficult to flexibly change a configuration of linkage data between nodes since the specification of the AP program also needs to be changed.

On the other hand, according to the state prediction system 100 of the present embodiment, it is possible to flexibly implement the machine-learning and AI processing with respect to data for each node having data to be processed. In addition, it is possible to change a collection destination of original data, types of data, a feature quantity and an identification function of the machine-learning, a dictionary used for identification and prediction, types of output data, etc. by various settings, and perform simultaneous parallel operations. Furthermore, it is possible to realize linkage with data processing of other nodes via input or output data.

FIG. 8 illustrates a flowchart showing an order operation processing flow in the store operation system 300.

Among the main operations of the store operation system 300, for example, an order function is set as a target to be executed, and a Cell instance 700 corresponding to the order function is generated (S201).

The Cell instance 700 for each order operation processing is started (S202). Basic function setting item is set or selected. The order operation processing which has been set is started. An instance of a subclass of a Cell class is started. A basic function setting item (name of the second level operation) is set or selected. The order operation processing which has been set is started.

The order operation Cell instance 700 outputs order-related data (S203). The order operation Cell instance outputs the order-related data of a default content for each order function in accordance with the selection (setting) above.

The order operation Cell instance 700 acquires data from the DB (S204). The order operation Cell instance acquires the data relating to constraints to be optimized.

The order operation Cell instance 700 learns, predicts, and evaluates the constraints to be optimized, and then outputs order data which is updated based on an expected value and a recommended value (S205) . For example, prediction processing (prediction dictionary) of such as an order quantity, an order date, a purchase price, and a delivery date, and evaluation processing (evaluation dictionary) are executed.

When the order operation processing is not completed (S206: No), the processing returns to step S204. When the order operation processing is completed (S206: YES), the processing is ended. Whether or not the order operation processing has been completed is determined based on an evaluation criterion such that a difference between an individual target value or the expected value and the predicted value falls within a target threshold value, and a total difference of the entire items becomes minimum.

In a conventional order operation at a store, an order (purchase) quantity has been determined based on a sales result in the same time period (date) and a latest sales condition, or based on experience of a person in charge of order (purchase) . For this reason, there have been problems that an appropriate order quantity cannot be determined until the time approaches, variation occurs largely among persons in charge, it takes labor, and it is difficult to link an order quantity with, for example, a sales profit plan, order of other products, product display, and warehouse management.

By applying the state prediction system according to the present embodiment to the store operation system 300, in addition to labor saving and automation of the order (purchase) operation, an effect of improving sales and profits by solving the above-mentioned conventional problems can be obtained.

### <Manufacturing Site Management System>

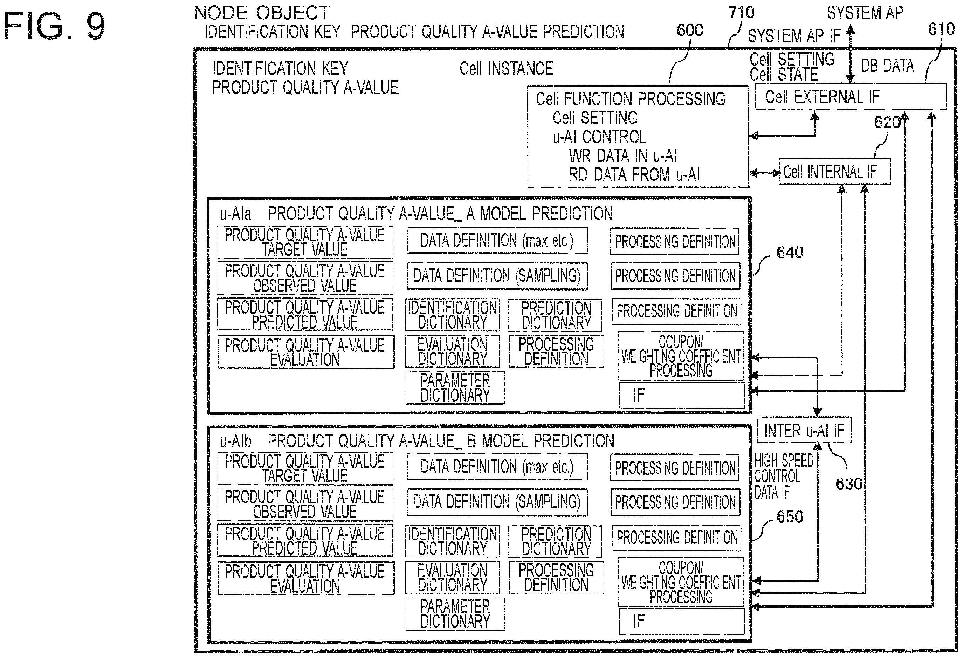

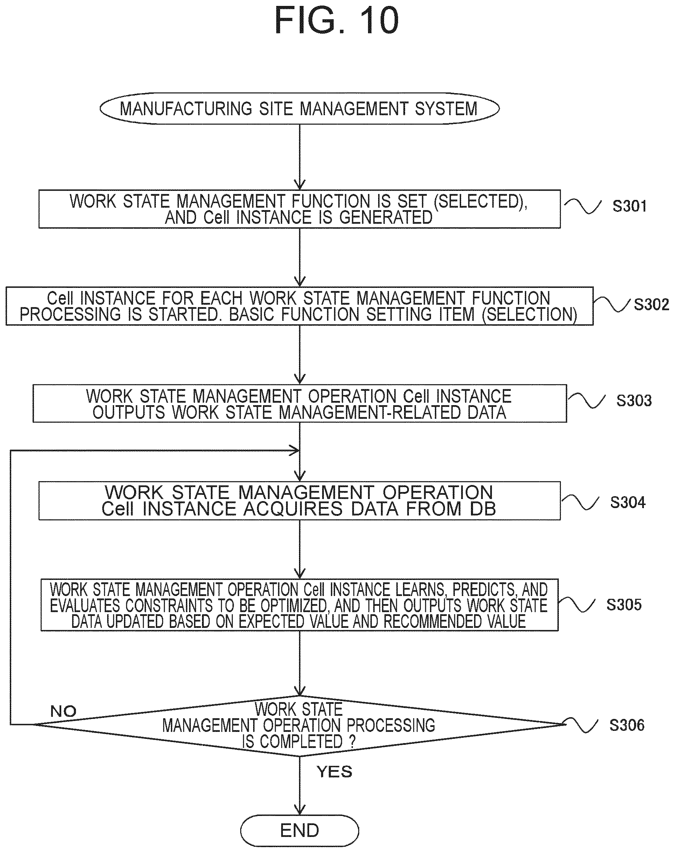

FIG. 9 illustrates a configuration example of a Cell instance corresponding to a node object "Product Quality A-Value Prediction". A Cell instance 710 is a Cell instance generated in a process of predicting a product quality A-value when applied to product quality management in a manufacturing site management system. FIG. 10 illustrates a work state management operation processing flow in the manufacturing site management system to which the state prediction system 100 according to the present embodiment is applied.

As one of the steps in the work state management operation processing flow included in the manufacturing site management system, prediction of a product quality is performed. FIG. 9 is an example of an instance generated in the product quality prediction. In the work state management operation processing flow, firstly as well, a Cell class instance and a u-AI class instance are generated, and then data is acquired from the DB and work state data is output (see FIG. 9).

In the work state management operation processing flow, firstly, a work state management function is set (selected) and the Cell instance 710 is generated (S301) . A manufacturing site AP is provided with work state setting processing. The manufacturing site management processing generates a Cell class instance for each function (e.g., work state variation, product state variation, work progress, consumption of members, manufacturing equipment state, tool state, etc.).

The Cell instance 710 for each work state management function processing is started, and a basic function setting item is selected or set (S302). The work state management operation processing which has been set is started, and an instance of a subclass of the Cell class is started. The basic function setting item is selected or set.

The work state management operation Cell instance 710 outputs work state management-related data of a default content for each work management function in accordance with the selection (setting) above (S303).

The work state management operation Cell instance 710 acquires data relating to constraints to be optimized from the DB (S304) .

The work state management operation Cell instance 710 learns, predicts, and evaluates the constraints to be optimized, and outputs work state data updated based on an expected value and a recommended value (S305). In this step, prediction processing (prediction dictionary) of, for example, work state variation, product state variation, work progress, consumption of members, manufacturing equipment state, tool state, etc. is performed. Alternatively, evaluation processing (evaluation dictionary) may be performed.

When the work state management operation processing is not completed (S306: No), the processing returns to step S304. When the work state management operation processing is completed (S306: YES), the processing is ended. Whether or not the work state management operation processing is completed is determined based on an evaluation criterion such that a difference between an individual target value or the expected value and the predicted value falls within a target threshold value and the total difference of the entire items becomes minimum.

### <Design Operation System>

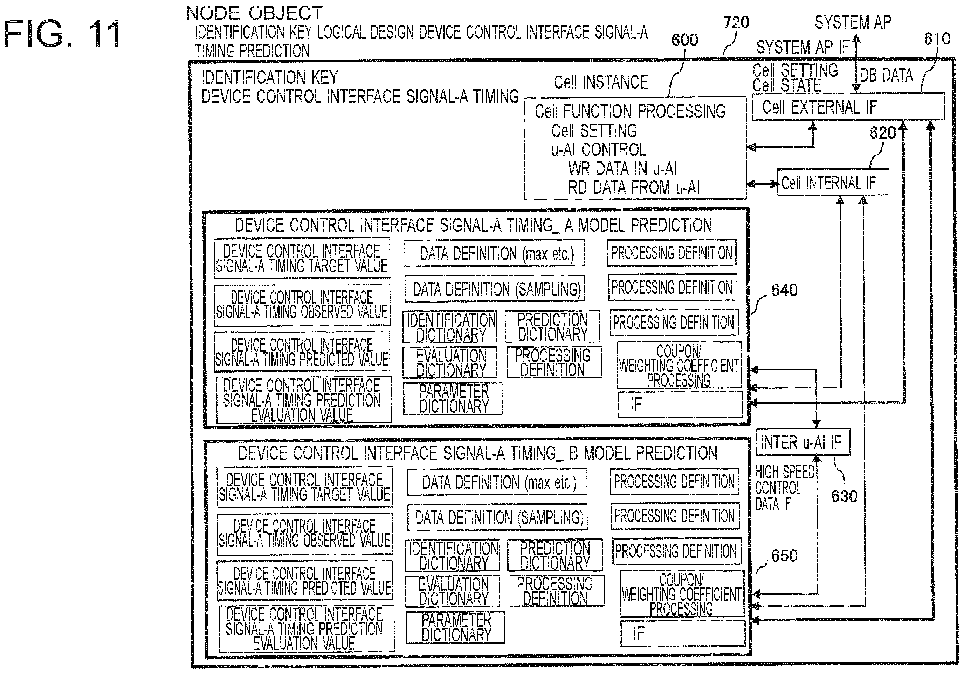

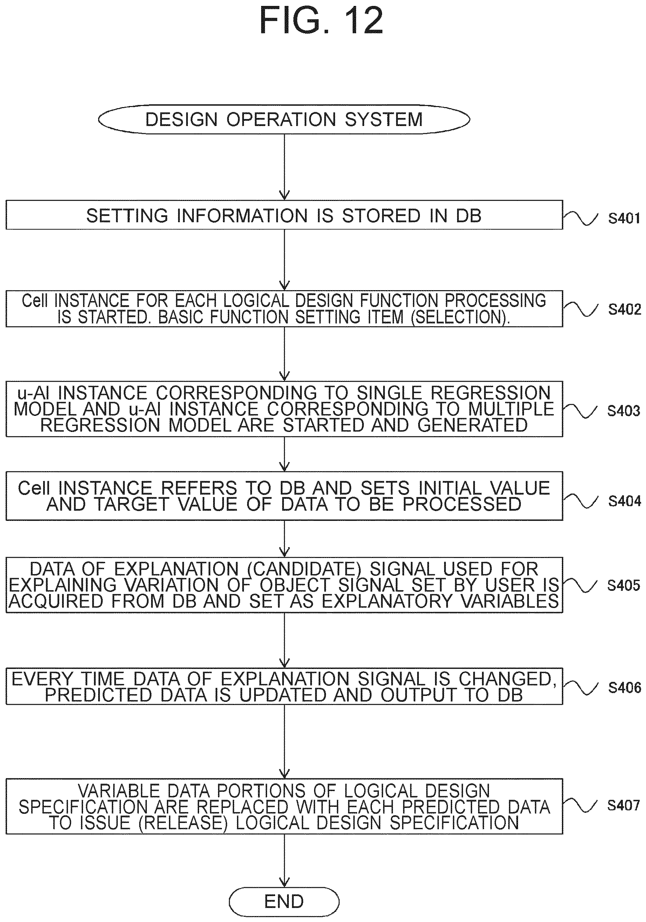

Next, an example in which a state prediction system is applied to a design operation system will be described. FIG. 11 illustrates a configuration example of a Cell instance corresponding to a node object "Logical Design Device Control Interface Signal-A Timing Prediction". A Cell instance 720 is a Cell instance generated in a process of predicting a timing of a device control interface signal-A when applied to creation of a design specification included in a design operation in the design operation system. FIG. 12 illustrates a logical design processing flow in the design operation system to which the state prediction system 100 according to the present embodiment is applied.

An operation structure includes a design process. As an actual state of the design process, a logical design processing is included in a design operation system AP. In the logical design processing, it is assumed that, among logic circuit devices constituting a target logic circuit system, as a specification of an interface signal timing of a commercially-available component and/or an existing component being a constraint of the logical design operation, timing data of the interface signal is stored in advance in the storage of the DB, etc.

In the logical design processing, a logical design specification of a logic circuit to be newly designed or changed in design is an object to be processed. Variable data in the logical design specification is a node object. For each node object, a Cell class instance and a u-AI class instance are generated, and then data is acquired from the DB. A processing result of each node object logic is reflected in the variable data of the logical design specification (required setting data in a format of the logical design specification) so that the logical design specification is created and output as the processing result.

The user performs the following settings in advance in an initial setting of a logical design function setting of the system AP, and the setting information is stored in the DB (S401).

The settings mentioned above include an object signal and its signal type to be newly designed or changed in design in the logical design operation, the variable data of the object signal (required setting data), initial setting values of the object signal and the explanatory signal (e.g., same time width value as a reference clock set by the user), the timing data of the interface signal of the logic circuit device stored in advance in the DB as the target value, logic circuit processing time, power consumption, etc.

The object signal and its variable data include the following. That is, they include: time width data of the reference clock signal; logical device control interface circuit signal; data circuit signal; timing data indicating the time width of the circuit signal such as a reset circuit signal at a rate relative to the reference clock signal time width; timing data indicating a phase time with respect to the reference clock signal; time difference data of less than one reference clock signal width of a signal change point relative to the reference clock signal; logic circuit processing time; power consumption; and explanation (candidate) signal (object signal is another signal explanation (candidate) signal) used for explaining the variation of the object signal.

The system AP reads out the user settings, and generates and starts Cell instances by associating each piece of the variable data of the user-set signals with each node object (S402).

When the signal type of the object signal which is set by the user is a logical device control interface circuit signal, a Cell instance corresponding to a logical timing signal is generated.

In the following, the subsequent processing operations will be explained by referring to an example of a Cell instance generated corresponding to timing data of the logical device control interface circuit signal.

The Cell instance refers to user system setting information which is set upon generation thereof, determines that the data to be processed is the data of the logical timing signal with an explanation (candidate) signal, and generates and starts a u-AI instance corresponding to a single regression model and a u-AI instance corresponding to a multiple regression model (S403).

The Cell instance refers to the DB and sets an initial value and a target value of the data to be processed (S404).

Here, the initial value to be initially set is data of the same time width as a reference clock which is set by the user, and the target value is timing data of the interface signal of the logic circuit device.

After setting the initial setting, a Cell instance and a u-AI instance of a node object perform learning as follows.

Data (at the first time, default data which is initially set) of the explanation (candidate) signal used for explaining the variation of the object signal set by the user is acquired from the DB and set as an explanatory variable (S405).

The learning for modeling is performed by using the data corresponding to each division of the time series of a signal which may be related to a signal to be modeled and the target value as training data.

The learning above is performed by comparing predicted data, which is an output of the model, with the target value and evaluating them, and calculating a coefficient parameter of a regression model so as to minimize a difference.

A Cell instance of each node object outputs the predicted data to the DB. In addition, a weighting coefficient, etc. with respect to the explanatory signal used for the prediction model in the learning is output as a coupon.

The data of the explanatory signal for explaining the variation of the object signal is acquired from the DB again, and compared and evaluated with the target value. The coefficient parameter of the regression model is updated so that the difference is minimized, and the predicted data is output to the DB.

Every time the data of the explanation signal is changed, the predicted data is updated and output to the DB (S406).

The operations described above are repeated until the update of predicted data from the Cell instance of each node object is settled. The system AP program 106e detects that the update of predicted data from the Cell instance of each node object has been settled, and issues (releases) the logical design specification by replacing variable data portions of the logical design specification with each predicted data (S407).

As the major items which are depending on the type of the variable data in the logical design specification, the Cell instance and u-AI instance include not only the predicted data, but also evaluation data, expected value data, and recommended value data.

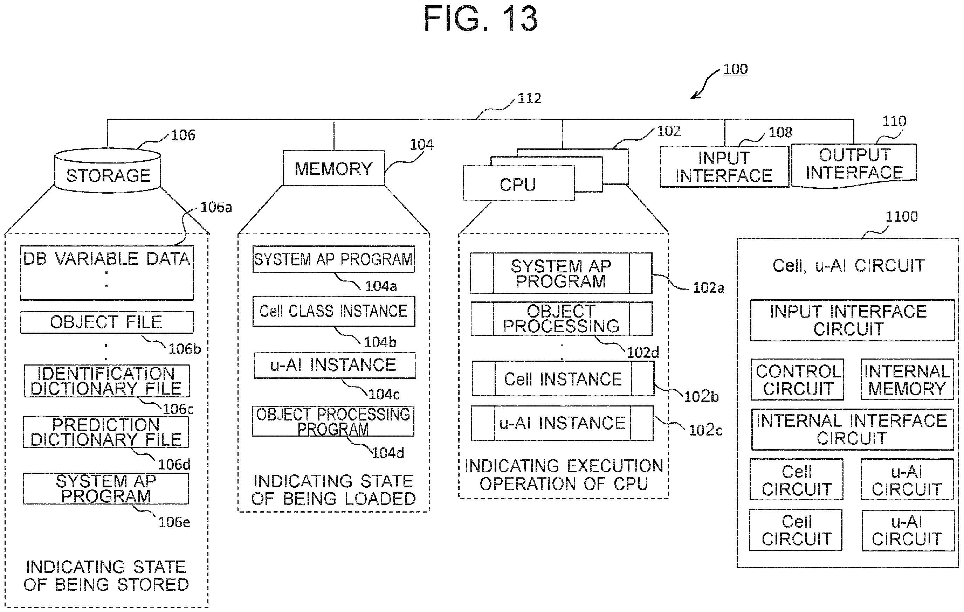

FIG. 13 illustrates another implementation example of the state prediction system. As illustrated in FIG. 8, the state prediction system may be implemented with a dedicated hard device 1100.

While a conventional machine-learning and AI system performs one identification process and/or prediction process at a time, the present embodiment enables to perform a large number of identification and/or prediction processes simultaneously.

In addition, in the conventional machine-learning and AI system, the load of the identification and prediction processing is heavy, and accordingly, it is impossible to produce results in real time for a large number of objects through edges (incorporation and embedding). The reasons are that the load of the processing of an SVM and a DNN is heavy when an identification model has high precision, and the load of the processing of a GMM and an RNN is heavy when a generation model has high precision. Furthermore, in the conventional reinforcement learning, since a DQN requires a large number of times of iterative learning, the load of the processing becomes heavy and thus a processing system with high power is demanded even in the processing for only a single object. Still further, a GAN uses a DNN for both identification and generation, and thus the load of the processing is heavy. Therefore, the conventional machine-learning and AI system is mostly executed by batch processing, and thus it has not been possible to realize real-time processing.

On the other hand, in the present embodiment, according to a method of increasing precision by competition between an identification model and a generation model, time series prediction of which the load of the processing is light and good in precision is used for the identification model, and an approximate distribution, a regression, or a hidden Markov model makes the load of the processing light for the generation model, thereby realizing the processing through an edge so that the real-time operation becomes possible.

By enabling linkage between machine-learning and AI, which has not been conventionally performed, it becomes possible to automatically generate a new function and control which have not been conventionally performed. With this configuration, a limit of target approach by the control that has been set in prediction evaluation is indicated. Moreover, the control that has not been set is automatically generated so that recommendation for the target approach can be output.

Furthermore, in the case of machine-learning using deep learning as AI processing, there is a problem that an intermediate layer is invisible and thus an internal processing state cannot be confirmed from the outside. On the other hand, in the present invention, since a mutual interface of the machine-learning sections of each node is provided, the processing state can be grasped from the outside and improved.

The embodiments described above do not limit the present invention, and modifications within a scope that does not depart from the concept of the present invention belong to the technical scope of the present invention. For example, application examples of the state prediction system are not limited to the examples described above. Each system to which the state prediction system is applied controls an object by using a predicted value, and thus corresponds to a state control system provided with a state prediction system.

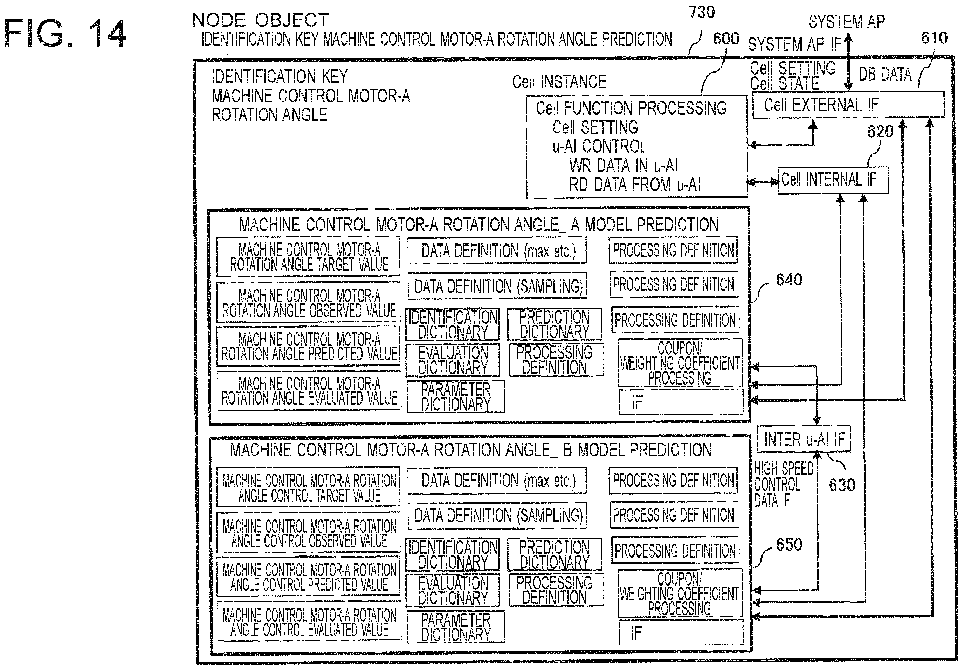

For example, a state prediction system may be applied to a machine control system. In the machine control system, when performing machine-control of a robot, etc., a Cell instance 730 corresponding to a node object "Machine Control Motor-A Rotation Angle Prediction" may be configured as illustrated in FIG. 14.

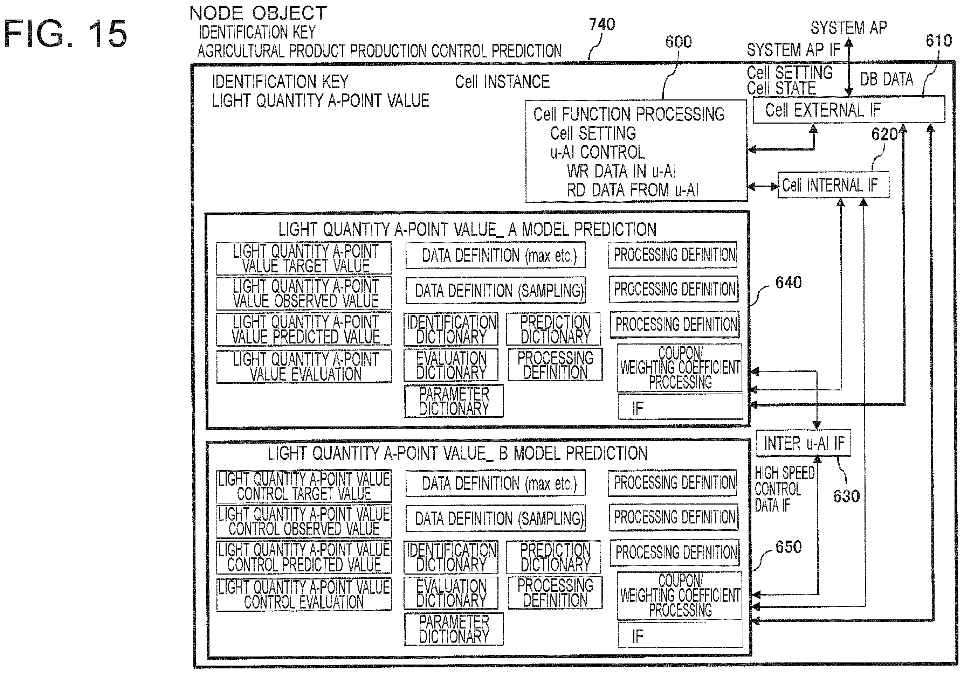

The state prediction system may also be applied to an agricultural product production control system in the field of agriculture. In the agricultural product production control system, when controlling a light quantity value at a point-A in order to control the production of agricultural products, a Cell instance 740 corresponding to a node object "Agricultural Product Production Control Prediction" may be configured as illustrated in FIG. 15.

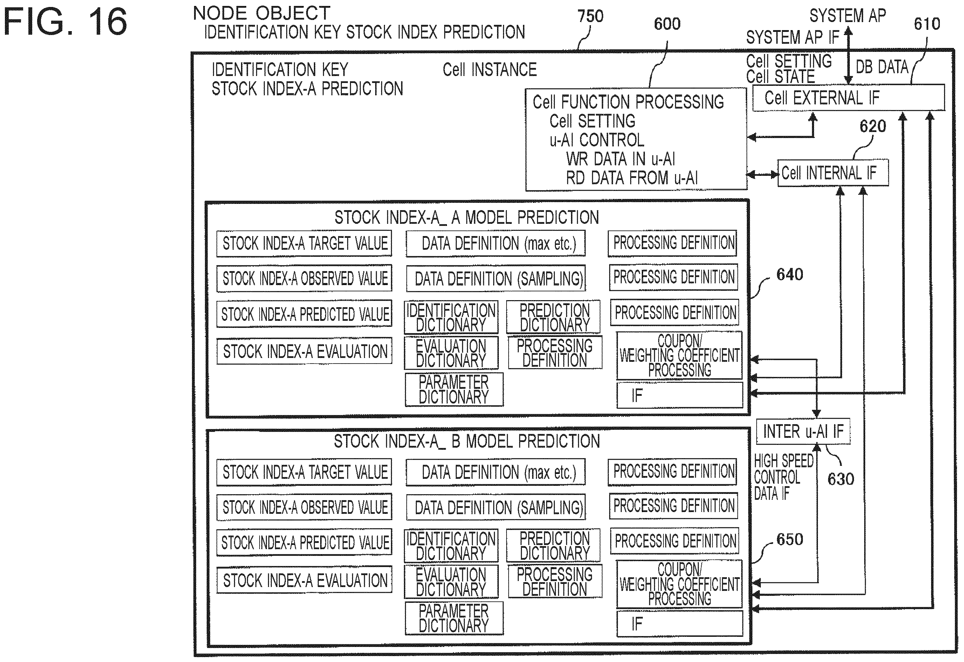

The state prediction system may also be applied to a financial investment system. In the investment system, a Cell instance 750 corresponding to a node object "Stock Index Prediction" may be configured as illustrated in FIG. 16.

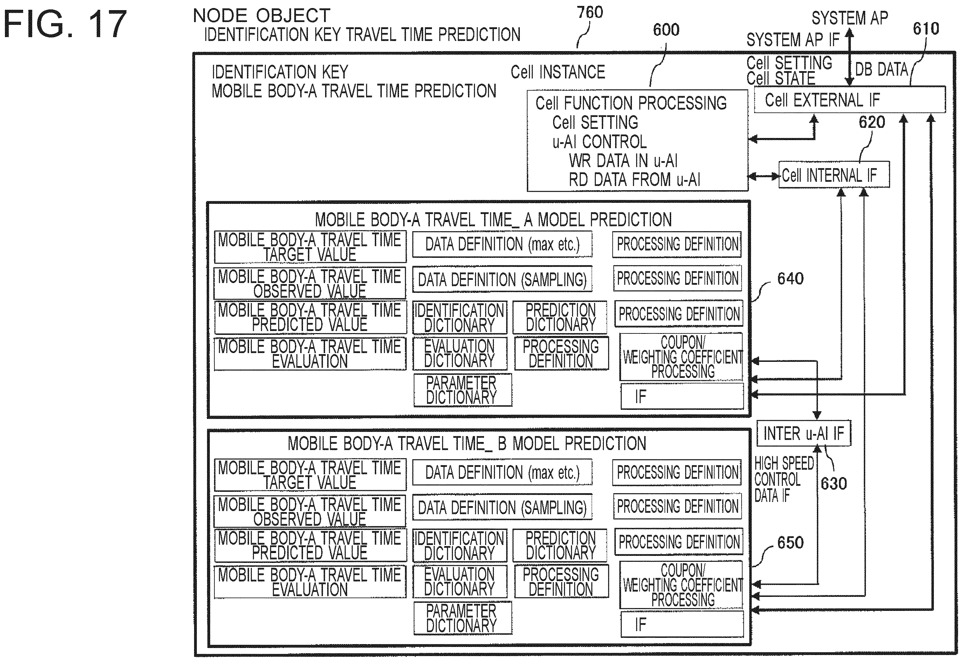

The state prediction system may also be applied to a transport planning system in the field of transportation. In the transport planning system, a Cell instance 760 corresponding to a node object "Travel Time Prediction" may be configured as illustrated in FIG. 17.

### REFERENCE SIGNS LIST

- 100: : state prediction system
- 102: : CPU
- 104: : memory
- 104b: : Cell instance
- 104c: : u-AI instance
- 106: : storage
- 106a: : DB variable data
- 106b: : object file
- 106c: : identification dictionary file
- 106d: : prediction dictionary file
- 106e: : system AP program
- 108: : input interface
- 110: : output interface
- 112: : bus
- 115: : Cell class program
- 120: : u-AI class program
- 130A: : first Cell instance
- 130B: : second Cell instance
- 140A1: : first u-AI instance
- 140A2: : second u-AI instance
- 140B1: : first u-AI instance
- 140B2: : second u-AI instance
- 200: : object
- 210A: : first node object
- 210B: : second node object
- 300: : store operation system
- 301: : line
- 302: : column
- 310: : object
- 311: : order form object for product class A
- 312: : order form object for product class B
- 330: : entry field
- 340: : Cell instance
- 360: : user information system
- 600: : Cell function processor
- 610: : Cell external IF
- 620: : Cell internal IF
- 630: : inter u-AI IF
- 640: : first u-AI
- 650: : second u-AI
- 700: : Cell instance
- 710: : Cell instance
- 720: : Cell instance
- 730: : Cell instance
- 740: : Cell instance
- 750: : Cell instance
- 760: : Cell instance
- 1100: : dedicated hard device
- 3401: : first u-AI instance
- 3402: : second u-AI instance

## Claims

1. A state prediction system that outputs a predicted value of a state of an object based on a plurality of variable data, comprising:
a plurality of embedded machine-learning sections, each of the plurality of embedded machine-learning sections being configured to perform processing for each piece of the plurality of variable data in accordance therewith, and compute a predicted value of the plurality of variable data; and
a mutual interface configured to link the plurality of embedded machine-learning sections to each other, wherein
the plurality of embedded machine-learning sections is configured to perform parallel processing,
each of the plurality of embedded machine-learning sections computes a predicted value of the plurality of variable data so as to output the predicted value to the mutual interface,
when a predicted value output from one of the plurality of embedded machine-learning sections changes, the one of the plurality of embedded machine-learning sections passes the predicted value that has changed to another one of the plurality of embedded machine-learning sections through the mutual interface, and
the another one of the plurality of embedded machine-learning sections which has acquired the predicted value that has changed recomputes a new predicted value of the plurality of variable data based on the predicted value that has changed as a new input so as to output the new predicted value to the mutual interface.

2. The state prediction system according to claim 1, further comprising:
a first embedded machine-learning section configured to perform identification or prediction with respect to one piece of variable data; and
a second embedded machine-learning section configured to perform generation model prediction with respect to the one piece of variable data, wherein
the identification or prediction and the generation model prediction are evaluated based on each of an output of the first embedded machine-learning section and an output of the second embedded machine-learning section, and
control is performed by using the identification or prediction or the generation model prediction, which has higher evaluation.

3. The state prediction system according to any one of claim 1 or claim 2, further comprising a token interface configured to evaluate, as a linkage effect with other embedded machine-learning sections, the linkage effect of precision of prediction with other embedded machine-learning sections.

4. The state prediction system according to any one of claim 1 or claim 2, further comprising a token interface configured to evaluate, as a linkage effect with other embedded machine-learning sections, the linkage effect of control for other embedded machine-learning sections.

5. The state prediction system according to any one of claim 1, claim 2, claim 3, or claim 4, wherein
the state prediction system is configured with a plurality of nodes, and
each of the plurality of nodes is configured with each of the plurality of embedded machine-learning sections to execute system state optimal control across the plurality of nodes.

6. The state prediction system according to any one of claim 1, claim 2, claim 3, claim 4, or claim 5, wherein
the plurality of embedded machine-learning sections configured to perform computation for each different piece of variable data is included in one Cell.
